# EUROPÄISCHE PATENTSCHRIFT

(11) **EP 3 724 253 B1**
(45) Veröffentlichungstag und Bekanntmachung des Hinweises auf die Patenterteilung: **05.01.2022**
(21) Anmeldenummer: 18807971.9
(22) Anmeldetag: 23.11.2018
(51) Int. Cl.: C08G 59/66, C08G 59/68, C09J 4/00, C09J 163/00, C09D 4/00, C09D 163/00

(54) **LICHTFIXIERBARE UND WARMHÄRTENDE MASSEN AUF BASIS VON EPOXIDHARZEN UND THIOLEN**
LIGHT-FIXABLE AND HEAT-CURING COMPOUNDS BASED ON EPOXY RESINS AND THIOLS
MATIÈRES DURCISSABLES À LA LUMIÈRE ET THERMODURCISSABLES À BASE DE RÉSINES ÉPOXY ET DE THIOLS

(30) Priorität: 13.12.2017 DE 102017129780
(43) Veröffentlichungstag der Anmeldung: 21.10.2020
(73) Patentinhaber: DELO Industrie Klebstoffe GmbH & Co. KGaA, 86949 Windach (DE)
(72) Erfinder: ZILLESSEN, Andreas, 86159 Augsburg (DE); ROEDIGER, Sabrina, 82211 Herrsching (DE); SUEVEGES, Bastian, 86949 Windach (DE); BORN, Robert, 82205 Gilching (DE)
(74) Vertreter: Prinz & Partner mbB
(86) Internationale Anmeldenummer: PCT/EP2018/082303
(87) Internationale Veröffentlichungsnummer: WO 2019/115203

(56) Entgegenhaltungen:
- CN-A- 102 134 449
- US-A1- 2007 096 056

## Beschreibung

### GEBIET DER ERFINDUNG

Die vorliegende Erfindung betrifft eine bei Raumtemperatur flüssige Einkomponentenmasse, die durch Strahlung fixiert und durch Wärme gehärtet werden kann. Die Masse umfasst eine mindestens difunktionelle Epoxidverbindung, ein mindestens difunktionelles Thiol als Härter für die Epoxidverbindung, eine strahlungshärtbare Verbindung, einen Photoinitiator, einen Beschleuniger und einen Stabilisator.

Darüber hinaus betrifft die Erfindung ein Verfahren zum Fügen, Beschichten oder Vergießen von Substraten unter Verwendung der Einkomponentenmasse.

### TECHNISCHER HINTERGRUND

Epoxidmassen mit thiolbasierten Härtern sind beispielsweise in der US 6 153 719 A offenbart und zeichnen sich durch eine hohe Reaktivität und kurze Verarbeitungszeit bei Raumtemperatur aus. Aus diesem Grund werden die beschriebenen Massen bevorzugt als zweikomponentige Systeme bereitgestellt, in denen die Epoxidkomponente getrennt von der reaktiven Härterkomponente gelagert ist.

Darüber hinaus sind Einkomponentenmassen auf der Grundlage von Epoxidverbindungen mit Härtern auf Thiolbasis bekannt, die eine begrenzte Lagerstabilität sowie eine kurze Verarbeitungszeit bei Raumtemperatur aufweisen. Aus der US 5 430 112 ist bekannt, dass sich die Stabilität von thiolhärtenden Epoxidzusammensetzungen bei Raumtemperatur durch Zusatz eines latenten Beschleunigers für die Epoxidhärtung verbessern lässt, der durch Umsetzung eines primären oder sekundären Amins mit einer isocyanathaltigen Verbindung unter Bildung eines Harnstoffderivats erhalten wird. Außerdem wird der Einsatz von festen, in der Epoxidmatrix bei Raumtemperatur wenig löslichen Aminverbindungen als Beschleuniger beschrieben. Die bekannten Epoxidmassen sind jedoch nicht strahlungshärtbar.

Die US 6 232 426 B1 und US 7 479 534 B2 offenbaren thiolhärtbare Epoxidmassen, die eine schwerlösliche Stickstoffverbindung als latenten Beschleuniger sowie zusätzlich eine lewis-saure Verbindung aus der Gruppe der Titanate und/oder Borate als Stabilisator zur Verbesserung der Lagerstabilität enthalten.

Ein weiterer Vorschlag zur Verbesserung der Stabilität von thiolhärtenden Epoxidmassen wird in der US 6 653 371 B1 beschrieben. Die erfindungsgemäßen Formulierungen enthalten neben einem Epoxidharz, einem Polythiol und einem latenten Beschleuniger auf Basis einer Stickstoffverbindung zusätzlich eine feste organische Säure. Die organische Säure liegt unterhalb der typischen Härtungstemperatur der Zusammensetzung in fester Form dispergiert in der Epoxidmatrix vor und weist einen pKs von 12 oder kleiner auf.

Die im Stand der Technik vielfach beschriebene niedrige Stabilität von einkomponentigen Epoxidmassen mit thiolbasierten Härtern bedingt gleichzeitig den Vorteil einer niedrigen Härtungstemperatur. Die US 2017/0073459 A1 offenbart den Einsatz von thiolhärtenden Epoxidmassen, die bereits bei 80 °C aushärten und sich damit für den Einsatz zur Fertigung temperaturempfindlicher Bauteile wie Kameramodule eignen sollen. Im Gegenzug besitzen diese Massen nur eine sehr kurze Verarbeitungszeit bei Raumtemperatur.

Für elektronische und optische Anwendungen geeignete Epoxidmassen sollen nicht nur eine niedrige Härtungstemperatur aufweisen. Vielmehr sollen die gehärteten Massen auch eine hohe Stabilität gegenüber Temperatur- und Feuchteeinflüssen aufweisen. Die WO 2015/060439 A1 beschreibt die Verwendung eines speziellen esterfreien Thiols als Härter für ein Epoxidharz, um die Feuchtebeständigkeit der ausgehärteten Masse zu erhöhen. Aus der WO 2016/143815 A1 ist eine Epoxidharzmasse mit einem esterfreien Thiol auf Basis einer Glycolurilstruktur bekannt.

Alle bisher beschriebenen thiolhärtenden Epoxidmassen sind rein warmhärtende Massen. Eine zusätzliche Härtungsoption, wie beispielsweise durch Bestrahlung mit aktinischer Strahlung, steht mit diesen Massen nicht zur Verfügung. Die beschriebenen Massen eignen sich somit nicht zur Anwendung in schnellen Prozessen, bei denen ein Fixieren der Massen erforderlich ist, um deren Formstabilität bis zur und während der Warmhärtung zu gewährleisten.

Die US 2007/0096056 A1 offenbart eine Einkomponentenmasse, die neben einem Epoxidharz, einem latenten Härtungsbeschleuniger und einem mindestens difunktionellen Thiol zusätzlich eine strahlungshärtbare Verbindung auf Basis eines (Meth)acrylats und einen Photoinitiator umfasst. Durch die Kombination zweier Härtungsmechanismen sollen die Massen auch in Schattenzonen sicher aushärten. Der Anteil des difunktionellen Thiols ist jedoch auf höchstens 5 Gew.-% beschränkt, um eine ausreichende Verarbeitungszeit bei Raumtemperatur zu erreichen. Höhere Anteile des Thiols sind unerwünscht, da diese die Stabilität der Massen negativ beeinflussen. Die Begrenzung des Thiolanteils schränkt jedoch die Formulierungsfreiheit ein. Außerdem kann über das Thiol nur eine geringe Vernetzungsdichte erreicht werden. Darüber hinaus sind die ausgehärteten Massen aufgrund der bevorzugten Verwendung hydrolyselabiler, esterhaltiger Thiole nicht oder nicht ausreichend beständig gegenüber Temperatur und Feuchte, so dass deren Anwendbarkeit weiter eingeschränkt ist.

Die im Stand der Technik beschriebenen thiolhärtenden Epoxidmassen weisen daher entweder eine vertretbare Lagerstabilität und Verarbeitungszeit bei Raumtemperatur verbunden mit einer höheren Härtungstemperatur auf, oder sie können bei niedriger Temperatur gehärtet werden und zeigen dann eine nur geringe Lagerstabilität bei Raumtemperatur. Ferner sind keine Massen beschrieben, welche eine niedrige Härtungstemperatur zusammen mit einer ausreichend langen Verarbeitungszeit aufweisen und diese Eigenschaften erfolgreich mit einem zweiten Härtungsmechanismus kombinieren.

### ZUSAMMENFASSUNG DER ERFINDUNG

Der Erfindung liegt die Aufgabe zugrunde die Nachteile der aus dem Stand der Technik bekannten Zusammensetzungen zu vermeiden und einkomponentige Massen bereitzustellen, die bei einer niedrigen Härtungstemperatur innerhalb kurzer Zeit sicher aushärten und trotzdem eine ausreichende Verarbeitungszeit bei Raumtemperatur aufweisen.

Ferner sollen die Massen eine gute Lichtfixierfestigkeit aufweisen, um so ein breites Spektrum an Anwendungen zu ermöglichen, bei denen eine anfängliche Fixierung von Bauteilen durch Bestrahlung mit aktinischer Strahlung gefordert ist, bevor die Bauteile in weiteren Prozessen verarbeitet werden.

Diese Aufgaben werden erfindungsgemäß durch eine härtbare Einkomponentenmasse nach Anspruch 1 gelöst.

Vorteilhafte Ausführungsformen der erfindungsgemäßen Masse sind in den Unteransprüchen angegeben, die wahlweise miteinander kombiniert werden können.

Die Erfindung betrifft ferner ein Verfahren zum Fügen, Beschichten oder Vergießen von Substraten unter Verwendung der erfindungsgemäßen Masse. Durch Bestrahlung lässt sich die auf ein Substrat applizierte Masse in einen formstabilen Zustand überführen und wahlweise zeitlich entkoppelt in nachfolgenden Prozessschritten verarbeiten. Danach kann die bestrahlte Masse in einem Ofenprozess abschließend warm gehärtet werden.

Gegenstand der Erfindung ist weiter die Verwendung der erfindungsgemäßen Masse als Klebstoff oder Dichtstoff für das Verkleben, Vergießen, Abdichten oder Beschichten von Substraten, insbesondere von optischen und/oder elektronischen Bauteilen.

Die erfindungsgemäße Einkomponentenmasse ist bei Raumtemperatur flüssig und kann durch Strahlung fixiert und durch Wärme gehärtet werden. Die Masse umfasst die folgenden Komponenten: (A) eine mindestens difunktionelle epoxidhaltige Verbindung; (B) ein mindestens difunktionelles Thiol; (C) eine strahlungshärtbare Verbindung, (D) einen Photoinitiator, (E) ein Stabilisatorgemisch, das mindestens ein Sulfonylisocyanat und mindestens eine Säure enthält; und (F) eine Stickstoffverbindung als Beschleuniger

Die erfindungsgemäße Einkomponentenmasse weist eine ausreichende Verarbeitbarkeit bei Raumtemperatur von bevorzugt mindestens 24 h, besonders bevorzugt mindestens 72 h, auf und kann durch Bestrahlen mit aktinischer Strahlung in einen formstabilen Zustand überführt werden. Gleichzeitig härten die erfindungsgemäßen Massen schon bei niedriger Temperatur, bevorzugt ab etwa 60 °C, in für industrielle Prozesse akzeptabler Zeit, bevorzugt innerhalb von 90 min vollständig aus. Überraschenderweise wurde gefunden, dass die Stabilität der Massen durch Verwendung eines Stabilisatorgemisches aus einem Sulfonylisocyanat und mindestens einer Säure erreicht werden kann, ohne die Härtungstemperatur zu beeinflussen.

### AUSFÜHRLICHE BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn verstanden werden sollen.

"Einkomponentig" oder "Einkomponentenmasse" bedeutet im Sinne der Erfindung, dass die genannten Komponenten der Masse zusammen in einer gemeinsamen Formulierung vorliegen, also nicht getrennt voneinander gelagert sind.

"Flüssig" bedeutet im Sinne der Erfindung, dass bei 23 °C der durch Viskositätsmessung bestimmte Verlustmodul G" größer als der Speichermodul G' der betreffenden Masse ist.

Die Massen gelten als "verarbeitbar", wenn sich die Viskosität der jeweiligen Masse während einer Lagerung bei Raumtemperatur über einen Zeitraum von mindestens 24 h, bevorzugt mindestens 72 Stunden, um weniger als 25% erhöht.

Soweit der unbestimmte Artikel "ein" oder "eine" verwendet wird, ist damit auch die Pluralform "ein oder mehrere" umfasst, soweit diese nicht ausdrücklich ausgeschlossen wird.

"Mindestens difunktionell" bedeutet, dass pro Molekül zwei oder mehr Einheiten der jeweils genannten funktionellen Gruppe enthalten sind.

Alle im Folgenden aufgeführten Gewichtsanteile beziehen sich jeweils auf das Gesamtgewicht der reaktiven Komponenten (A) bis (F). Für das Gesamtgewicht explizit nicht zu berücksichtigen sind Anteile an nicht reaktiven Additiven (G) wie beispielsweise Füllstoffen oder Weichmachern.

### Komponente (A): Mindestens difunktionelle Epoxidverbindung

Die mindestens difunktionelle Epoxidverbindung (A) ist in ihrer chemischen Struktur nicht weiter eingeschränkt und umfasst aromatische oder aliphatische Verbindungen mit mindestens zwei Epoxidgruppen im Molekül, wie beispielsweise cycloaliphatische Epoxide, Glycidylether, Glycidylamine und Mischungen davon.

Di- oder höherfunktionelle cycloaliphatische Epoxidverbindungen sind im Stand der Technik bekannt und beinhalten Verbindungen, die sowohl eine cycloaliphatische Gruppe als auch mindestens zwei Oxiranringe tragen. Beispielhafte Vertreter sind 3-Cyclohexenylmethyl-3-cyclohexylcarboxylatdiepoxid, 3,4-Epoxycyclohexylalkyl-3',4'-epoxy-cyclohexancarboxylat, 3,4-Epoxy-6-methylcyclohexylmethyl-3',4'-epoxy-6-methyl-cyclohexancarboxylat, Vinylcyclohexendioxid, Bis(3,4-Epoxycyclohexylmethyl)adipat, Dicyclopentadiendioxid, 1,2-Epoxy-6-(2,3-epoxypropoxy)hexahydro-4, 7-methanindan.

Aromatische Epoxidverbindungen können in den erfindungsgemäßen Massen ebenso verwendet werden. Beispiele für aromatische Epoxidverbindungen sind Bisphenol-A-Epoxidharze, Bisphenol-F-Epoxidharze, Phenol-Novolak-Epoxidharze, Cresol-Novolak-Epoxidharze, Biphenylepoxidharze, 4,4'-Biphenylepoxidharze, Divinylbenzoldioxid, 2-Glycidylphenylglycidylether, Naphthalindioldiglycidylether, Glycidylether von Tris(hydroxyphenyl)-methan, Glycidylether von Tris(hydroxyphenyl)-ethan. Ferner können auch alle vollständig oder teilweise hydrierten Analoga aromatischer Epoxidverbindungen eingesetzt werden. Bevorzugt sind halogenarme oder halogenfreie Bisphenol-A- und Bisphenol-F-Epoxidharze.

Auch mit epoxidhaltigen Gruppen substituierte Isocyanurate und andere heterocyclische Verbindungen können in den erfindungsgemäßen Massen als Komponente (A) eingesetzt werden. Beispielhaft seien Triglycidylisocyanurat und Monoallyldiglycidylisocyanurat genannt.

Außerdem können auch polyfunktionelle Epoxidharze aller genannten Harzgruppen, zäh elastifizierte Epoxidharze sowie Gemische verschiedener Epoxidverbindungen in den erfindungsgemäßen Massen eingesetzt werden.

Eine Kombination mehrerer epoxidhaltiger Verbindungen, von denen mindestens eine di- oder höherfunktionell ist, ist ebenfalls im Sinne der Erfindung.

Geeignete epoxidhaltige Verbindungen (A) sind unter den Handelsnamen CELLOXIDE^{™} 2021P, CELLOXIDE^{™} 8000 von der Firma Daicel Corporation, Japan, oder EPIKOTE^{™} RESIN 828 LVEL, EPIKOTE^{™} RESIN 166, EPIKOTE^{™} RESIN 169 von der Firma Momentive Specialty Chemicals B.V., Niederlande, oder Epilox^{™}-Harze der Produktreihen A, T und AF der Firma Leuna Harze, Deutschland, oder EPICLON^{™} 840, 840-S, 850, 850-S, EXA850CRP, 850-LC der Firma DIC K.K., Japan, kommerziell verfügbar.

Die Komponente (A) liegt in der erfindungsgemäßen Masse, bezogen auf das Gesamtgewicht der reaktiven Komponenten (A) bis (F), in einem Anteil von 5 bis 80 Gew.-% vor.

### Komponente (B): Mindestens difunktionelles Thiol

Das mindestens difunktionelle Thiol (B) dient in der erfindungsgemäßen Masse als Härter und umfasst Verbindungen mit mindestens zwei Thiolgruppen (-SH) im Molekül.

Die Komponente (B) ist in ihrer chemischen Struktur nicht weiter eingeschränkt und umfasst bevorzugt aromatische und aliphatische Thiole sowie Kombinationen davon.

Bevorzugt ist das mindestens difunktionelle Thiol aus der Gruppe ausgewählt, die aus esterbasierten Thiolen, Polyethern mit reaktiven Thiolgruppen, Polythioethern, Polythioetheracetalen, Polythioetherthioacetalen, Polysulfiden, thiolterminierten Urethanen, Thiolderivaten von Isocyanuraten und Glycoluril sowie Kombinationen davon besteht.

Beispiele für kommerziell erhältliche esterbasierte Thiole auf Basis der 2-Mercaptoessigsäure umfassen Trimethylolpropan-trimercaptoacetat, Pentaerythritoltetramercaptoacetat und Glycol-dimercaptoacetat, die unter den Markennamen Thiocure^{™} TMPMA, PETMA und GDMA von der Firma Bruno Bock verfügbar sind.

Weitere Beispiele für kommerziell erhältliche esterbasierte Thiole umfassen Trimethylolpropan-tris(3-mercaptopropionat), Pentaerythritol-tetrakis(3-mercaptobutylat), Glykol-di(3-mercaptopropionat) und Tris[2-(3-mercaptopropionyloxy)ethyl]isocyanurat, die unter den Markennamen Thiocure^{™} TMPMP, PETMP, GDMP und TEMPIC von der Firma Bruno Bock verfügbar sind.

Beispiele für kommerziell verfügbare Thioether umfassen DMDO (1,8-Dimercapto-3,6-dioxaoctane), erhältlich von der Firma Arkema S.A., DMDS (Dimercaptodiethylsulfide) und DMPT (2,3-Di((2-mercaptoethyl)thio)-1-propan-thiol), beide erhältlich von der Firma Bruno Bock.

Mit Bezug auf eine erhöhte Beständigkeit der ausgehärteten Massen gegenüber Temperatur und Feuchte ist der Einsatz esterfreier Thiole besonders bevorzugt. Beispiele für esterfreie Thiole können der JP 2012 153 794 A entnommen werden, die durch Inbezugnahme in die Beschreibung aufgenommen wird.

Besonders bevorzugt ist in der erfindungsgemäßen Masse eine Verwendung von Tris(3-mercaptopropyl)isocyanurat (TMPI) als trifunktionelles esterfreies Thiol. Es hat sich gezeigt, dass dieses Thiol sowohl eine gute Hydrolysestabilität gewährleistet, als auch die Haftung auf verschiedenen Substraten verbessert. Gemäß einer besonders bevorzugten Ausführungsform umfasst das mindestens difunktionelle Thiol der Komponente (B) daher Tris(3-mercaptopropyl)isocyanurat, allein oder im Gemisch mit anderen mindestens difunktionellen Thiolen.

Esterfreie Thiole auf Basis einer Glycolurilverbindung sind aus der EP 3 075 736 A1 bekannt. Auch diese können in den erfindungsgemäßen Massen als Komponente (B) verwendet werden, allein oder im Gemisch mit anderen mindestens difunktionellen Thiolen.

Höherfunktionelle Thiole, die beispielsweise durch oxidative Dimerisierungsprozesse von mindestens difunktionellen Thiolen erhältlich sind, können in der Komponente (B) ebenfalls eingesetzt werden.

Die voranstehende Aufzählung ist als beispielhaft und nicht abschließend zu sehen.

Bevorzugt beträgt der Anteil des mindestens difunktionellen Thiols in der erfindungsgemäßen Masse von 15 bis 80 Gew.-%, bezogen auf das Gesamtgewicht der reaktiven Komponenten (A) bis (F).

### Komponente (C): Strahlungshärtende Verbindung

Als strahlungshärtende Verbindung kommen in den erfindungsgemäßen Massen bevorzugt (Meth)Acrylate zum Einsatz. Diese sind in ihrer chemischen Struktur nicht weiter eingeschränkt. Beispielsweise können sowohl aliphatische als auch aromatische (Meth)Acrylate verwendet werden.

Die strahlungshärtende Verbindung (C) gewährleistet die Lichtfixierbarkeit der erfindungsgemäßen Masse und trägt mindestens eine radikalisch polymerisierbare Gruppe. Bevorzugt ist die strahlungshärtende Verbindung mindestens difunktionell. Geeignet sind beispielsweise die folgenden strahlungshärtenden Verbindungen: Isobornylacrylat, Stearylacrylat, Tetrahydrofurfurylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid, 4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat, Polybutadiendiacrylat, Cyclohexandimethanoldiacrylat, Diurethanacrylate von monomeren, oligomeren oder polymeren Diolen und Polyolen, Trimethylolpropantriacrylat (TMPTA), und Dipentaerythritolhexaacrylat (DPHA), und Kombinationen davon. Auch von mehrfach verzweigten oder dendrimeren Alkoholen abgeleitete höherfunktionelle Acrylate können vorteilhaft verwendet werden

Die analogen Methacrylate sind ebenfalls im Sinne der Erfindung.

Weiterhin eignen sich auch Verbindungen mit Allylgruppen, wie beispielsweise 1,3,5-Triazin-2,4,6(1H,3H,5H)-trion, das kommerziell als TAICROS^{®} erhältlich ist. Auch unhydrierte Polybutadiene mit freien Doppelbindungen wie beispielsweise die Poly BD^{®}-Typen können als strahlungshärtende Verbindung (C) eingesetzt werden. Weiterhin ist die Verwendung von Vinylethern ebenso möglich wie der Einsatz von ungesättigten Polyesterharzen.

Als höhermolekulare strahlungshärtbare Verbindung können Urethanacrylate auf Basis von Polyestern, Polyethern, Polycarbonatdiolen und/oder (hydrierten) Polybutadiendiolen als Komponente (C) zum Einsatz kommen.

Eine Kombination mehrerer strahlungshärtbarer Verbindungen ist ebenfalls im Sinne der Erfindung.

Die strahlungshärtende Verbindung liegt in der erfindungsgemäßen Einkomponentenmasse bevorzugt in einem Anteil von bis zu 50 Gew.-% vor, besonders bevorzugt in einem Anteil von 10 bis 50 Gew.-%.

Um eine hohe Lichtfixierfestigkeit bei kurzen Belichtungszeiten zu erreichen, enthalten die erfindungsgemäßen Massen bevorzugt mindestens 15 Gew.-% einer mindestens difunktionellen, strahlungshärtenden Verbindung als Komponente (C), bezogen auf das Gesamtgewicht der reaktiven Komponenten (A) bis (F). Bevorzugt liegt die mindestens difunktionelle strahlungshärtende Verbindung in einem Anteil von 15 bis 50 Gew.-% in der erfindungsgemäßen Masse vor.

Die strahlungshärtende Verbindung kann ein Gemisch aus einer monofunktionellen strahlungshärtenden Verbindung und einer mindestens difunktionellen strahlungshärtenden Verbindung umfassen. In diesem Fall kann die monofunktionelle strahlungshärtende Verbindung in einem Anteil von 0 bis 10 Gew.-% vorliegen, bezogen auf das Gesamtgewicht der reaktiven Komponenten (A) bis (F).

### Komponente (D): Photoinitiator

Neben der strahlungshärtbaren Verbindung (C) enthalten die Massen noch einen Photoinitiator (D) zur Aktivierung der radikalischen Polymerisation. Als Photoinitiatoren können die üblichen, im Handel erhältlichen Verbindungen eingesetzt werden, wie beispielsweise α-Hydroxyketone, Benzophenon, α,α'-Diethoxyacetophenon, 4,4-Diethylaminobenzophenon, 2,2-Dimethoxy-2-phenyl-acetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Mehtyl-o-benzoylbenzoat, Benzoin, Benzoinethylether, Benzoinisopropylether, Benzoinisobutylether, 2-Hydroxy-2-methyl-1 -phenyl-propan-1-on, 2-Isopropylthioxanthon, Dibenzosuberon, 2,4,6-Trimethylbenzoyldiphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L. Ferner sind die DAROCUR^{™}-Typen von BASF SE verwendbar, so beispielsweise die Typen DAROCUR MBF, DAROCUR 1173, DAROCUR TPO und DAROCUR 4265.

Der in den erfindungsgemäßen Massen als Komponente (D) eingesetzte Photoinitiator ist vorzugsweise durch aktinische Strahlung einer Wellenlänge von 200 bis 600 nm aktivierbar, besonders bevorzugt von 320 bis 480 nm. Bei Bedarf kann der Photoinitiator mit einem geeigneten Sensibilisierungsmittel kombiniert werden.

Der Photoinitiator (D) liegt in den erfindungsgemäßen Massen bevorzugt in einem Anteil von 0,01 bis 5 Gew.-% vor, bezogen auf das Gesamtgewicht der reaktiven Komponenten (A) bis (F).

### Komponente (E): Stabilisatorgemisch

Die erfindungsgemäßen Massen enthalten als wesentliches Merkmal ein Stabilisatorgemisch, das mindestens ein Sulfonylisocyanat (E1) und mindestens eine Säure (E2) umfasst oder daraus besteht.

Durch die Kombination der beiden Stabilisatoren ist es möglich, eine Verarbeitungszeit der erfindungsgemäßen Massen von mindestens 24 h, bevorzugt mindestens 72 h, bei Raumtemperatur zu gewährleisten und gleichzeitig eine vollständige Aushärtung bei niedriger Temperatur bereitzustellen.

Die erfindungsgemäßen Massen härten ab einer Härtungstemperatur von 40 bis 100 °C, bevorzugt von 60 °C bis 90 °C innerhalb von bis zu 90 min vollständig aus. Durch Erwärmen der Massen auf eine Temperatur oberhalb von 100 °C kann die für die vollständige Aushärtung der Massen benötigte Zeit zwar weiter verkürzt werden. Allerdings können die Massen dann nicht oder nur bedingt zum Kleben oder Vergießen von temperaturempfindlichen Bauteilen verwendet werden.

Eine Abwesenheit einer der beiden Stabilisatoren führt zu einer starken Verschlechterung der Verarbeitungszeit bei Raumtemperatur. Daher ist die gemeinsame Verwendung beider Stabilisatoren wesentlich für die erfindungsgemäßen Massen.

Die chemische Grundstruktur des Sulfonylisocyanates (E1) ist nicht weiter eingeschränkt, solange die Verbindung als funktionelle Gruppe wenigstens eine Sulfonylisocyanatgruppe -SO₂(NCO) aufweist. Die Sufonylisocyanatgruppe kann an einen aliphatischen oder aromatischen Rest gebunden sein. Die Herstellung von Sulfonylisocyanaten ist aus der US 3 484 466 oder der US 2 666 787 bekannt.

Das aliphatische Sulfonylisocyanat kann einen linearen oder verzweigten Alkylrest mit 1 bis 18 C-Atomen umfassen, bevorzugt mit 4 bis 8 C-Atomen.

Bevorzugt umfasst das Sulfonylisocyant (E1) ein aromatisches Sulfonylisocyanat, besonders bevorzugt ein monofunktionelles Arylsulfonylisocyanat. Der Arylrest kann ein wahlweise alkylsubstituierter oder unsubstituierter Phenylrest, Naphtylrest oder Bisphenylrest sein. Aromatische Sulfonylisocyanate sind beispielsweise durch Umsetzung von Arylsulfonamiden mit Phosgen, wahlweise in Gegenwart von aliphatischen Isocyanaten, zugänglich.

Die Sulfonylisocyanate können als einzelne Verbindung oder im Gemisch von zwei oder mehreren Sulfonylisocyanaten verwendet werden.

Besonders bevorzugt umfasst das Sulfonylisocyanat (E1) im Stabilisatorgemisch (E) p-Toluolsulfonylisocyanat, allein oder im Gemisch mit anderen Sulfonylisocyanaten.

Das Sulfonylisocyanat (E1) liegt in der erfindungsgemäßen Masse bevorzugt in einem Anteil von 0,01 Gew.-% bis 1 Gew.-% vor, bezogen auf das Gesamtgewicht der reaktiven Komponenten (A) bis (F), bevorzugt in einem Anteil von 0,01 bis 0,5 Gew.-%.

Als Säure (E2) kann grundsätzlich jede acide Verbindung verwendet werden, die in der Lage ist, Protonen zu übertragen. Bevorzugt weist die Säure einen pKs von 12 oder kleiner auf, besonders bevorzugt 10 oder kleiner. Insbesondere liegt der pKs Wert der Säure unterhalb des pKs Wertes der korrespondierenden Säure des Beschleunigers (F). Bevorzugt ist die Säure (E2) eine organische Säure.

Geeignete Säuren sind beispielsweise 3,4-Dihydroxybenzoesäure, 3,4,5-Trihydroxybenzoesäure, Embonsäure, Zitronensäure, Phenylboronsäure, Meldrumsäure, Phloroglucinol, Fumarsäure, Ascorbinsäure, Salicylsäure, 3,4-Dihydroxyzimtsäure, Chinonderivate enolisierbarer Säuren, acide Phenole und/oder phosphororganische Säuren. Die voranstehende Aufzählung ist dabei nur als beispielhaft und nicht abschließend zu sehen.

Weiter bevorzugt umfasst oder besteht die Säure aus einem aciden Phenol mit einem pKs von 9,0 oder weniger. Besonders bevorzugt umfasst die Säure Pyrogallol, allein oder im Gemisch mit einem anderen aciden Phenol und/oder einer anderen der vorgenannten Säuren.

Die Kombination von zwei oder mehreren Säuren (E2) und/oder zwei oder mehreren Sulfonylisocyanaten (E1) ist ebenfalls im Sinne der Erfindung.

In der erfindungsgemäßen Masse liegt die Säure (E2) bevorzugt in einem Anteil von 0,01 Gew.-% bis 1 Gew.-% vor, bezogen auf das Gesamtgewicht der reaktiven Komponenten (A) bis (F), besonders bevorzugt in einem Anteil von bis zu 0,5 Gew.-%.

### Komponente (F): Beschleuniger

Die erfindungsgemäßen Massen enthalten als weitere Komponente (F) einen Beschleuniger für die Härtung. Es können sowohl feste als auch flüssige Beschleuniger zum Einsatz kommen. Bevorzugt ist der Beschleuniger ein wärmelatenter Beschleuniger, der durch Erwärmen auf die Temperatur der Warmhärtung aktiviert wird und eine basische Verbindung freisetzt. Als Beschleuniger eignen sich alle Verbindungen, die auch als latente Härter für Epoxidverbindungen bekannt sind, und die bei den Temperaturen der Warmhärtung zur Additionsvernetzung mit der Epoxidverbindung geeignet sind. Der Beschleuniger liegt bei Raumtemperatur bevorzugt in fester Form dispergiert in der Zusammensetzung vor. Ferner können auch wärmelatente, flüssige Beschleuniger eingesetzt werden, insbesondere flüssige Beschleuniger mit blockierten Amingruppen, die beim Erwärmen in die freie Aminverbindung überführt werden.

Bevorzugt ist der Beschleuniger eine stickstoffhaltige Verbindung, besonders bevorzugt eine aus der Gruppe der Amine, Harnstoffe, Imidazole, Triazinderivate, Polyamidoamine und/oder Guanidine ausgewählte Verbindung.

Desweiteren können Addukte und/oder Umsetzungsprodukte von Epoxiden oder Isocyanaten mit den genannten Stickstoffverbindungen als Beschleuniger verwendet werden, insbesondere Umsetzungsprodukte mit Aminen, wie sie bereits in der US 5 430 112 beschrieben sind.

Beispiele für kommerziell verfügbare Beschleuniger sind Ajicure PN-H, Ajicure MY-24, Ajicure MY-25, Ajicure PN-23 (erhätlich von der Firma Ajinomoto Co., Inc., Tokyo, Japan); Fujicure FXR1081, FXR1020, FXR1030 (erhätlich von der Firma Sanho Chemical Co. Ltd); Aradur 9506 (erhältlich von der Firma Huntsman International LLC.) und Curezol (erhältlich von der Firma Shikoku Chemicals Corporation). Die Beschleuniger können ebenfalls in verkapselter Form vorliegen. Als Beispiele kommerziell erhältlicher Produkte seien Technicure^{®} LC-80 und Technicure^{®} LC-100 der Firma ACCI Speciality Materials genannt.

Neben der Verwendung der genannten Verbindungen ist auch der Einsatz photolatenter Basen möglich. Als mögliche Substanzklassen seien beispielhaft 4-(ortho-Nitrophenyl)-dihydropyridin, quartäre Organoborverbindungen, alpha-Amino-Acetophenone oder mit photolatenten Gruppen blockierte Amine genannt. Diese können durch aktinische Strahlung basische Verbindungen freisetzen und so ebenfalls als Beschleuniger wirken.

In der erfindungsgemäßen Masse liegt der Beschleuniger (F) bevorzugt in einem Anteil von 0,1 Gew.-% bis 15 Gew.-% vor, bezogen auf das Gesamtgewicht der reaktiven Komponenten (A) bis (F).

### Komponente (G): Zusatzstoffe

Neben den Komponenten (A) bis (F) können die erfindungsgemäßen Massen weitere Zusatzstoffe (G) enthalten. Bevorzugte Zusatzstoffe (G) sind Zähigkeitsmodifikatoren wie Core-Shell-Partikel oder Block-Copolymere, Farbstoffe, Pigmente, Fluoreszenzmittel, Thixotropiermittel, Verdicker, Antioxidantien, Weichmacher, Füllstoffe, Flammschutzmittel, Korrosionsinhibitoren, inerte und reaktive Verdünnungsmittel, Verlaufs- und Benetzungsadditive und Haftvermittler sowie Kombinationen davon.

Als Füllstoffe können anorganische und organische Füllstoffe verwendet werden. Die Füllstoffe können in der erfindungsgemäßen Masse in einem Anteil von 0 bis 90 Gew.-% enthalten sein. Alle übrigen der genannten Zusatzstoffe liegen in den erfindungsgemäßen Massen bevorzugt in einem Anteil von jeweils 0 bis 20 Gew.-% vor.

### Formulierung der erfindungsgemäßen Massen:

Eine Formulierung der erfindungsgemäßen Einkomponentenmassen umfasst bevorzugt die folgenden Komponenten, jeweils bezogen auf das Gesamtgewicht der Komponenten (A) bis (F):
(A) 5-80 Gew.- % einer mindestens difunktionellen epoxidhaltigen Verbindung;
(B) 15 - 80 Gew.- % eines mindestens difunktionellen Thiols; vorzugsweise Tris(3-mercaptopropyl)isocyanurat (TMPI), allein oder im Gemisch mit anderen difunktionellen Thiolen;
(C) 15 - 50 Gew.- % eines mindestens difunktionellen (Meth)Acrylats;
(D) 0,1 - 5 Gew.- % eines Photoinitiators;
(E) 0,01 - 0,5 Gew.- % eines Sulfonylisocyanates (E1) und 0,01 - 0,5 Gew.-% einer organischen Säure (E2);
(F) 0,5-15 Gew.- % einer Stickstoffverbindung als Beschleuniger, die in fester Form dispergiert in der Zusammensetzung vorliegt; und
(G) 0 bis 90 Gew.-% Füllstoffe sowie 0,1 bis 15 Gew.-% Thixotropiermittel.

Gemäß einer bevorzugten Ausführungsform besteht die Formulierung aus den genannten Komponenten.

Das Sulfonylisocyanat ist bevorzugt ein Arylsulfonylisocyanat, und besonders bevorzugt Toluolsulfonylisocyanat. Als Säure wird bevorzugt ein acides Phenol eingesetzt, besonders bevorzugt Pyrogallol.

### Verwendung der erfindungsgemäßen Massen

Durch die Möglichkeit der Lichtfixierung und einer Warmhärtung bei niedriger Temperatur, bevorzugt bereits ab etwa 60 °C, eignen sich die erfindungsgemäßen Massen für schnelle industrielle Prozesse mit kurzen Taktzeiten, bei denen gleichzeitig eine möglichst niedrige thermische Belastung der beteiligten Bauteile gefordert wird.

Gegenstand der Erfindung ist daher auch die Verwendung der erfindungsgemäßen Massen als Klebstoff oder Dichtstoff für das Verkleben, Vergießen, Abdichten oder Beschichten von Substraten. Als Substrate dienen bevorzugt optische und/oder elektronische Bauteile. Die auf die Bauteile applizierten Massen werden bevorzugt in einem Temperaturbereich von 40 bis 100 °C, ausgehärtet, besonders bevorzugt von 60 bis 90 °C, innerhalb einer Zeit von bis zu 90 min, bevorzugt innerhalb von 10 bis 90 min.

### Füge- oder Beschichtungsverfahren unter Verwendung der erfindungsgemäßen Massen

Die erfindungsgemäßen Massen bieten den Vorteil, dass in Fügeprozessen die Bauteile vor dem Warmhärtungsschritt durch Bestrahlung mit aktinischer Strahlung in ihrer Position zueinander fixiert werden können.

Ein entsprechendes Verfahren zum Verkleben, Vergießen oder Beschichten von Substraten unter Verwendung der erfindungsgemäßen Massen umfasst bevorzugt folgende Schritte:
a) Dosieren der Masse auf ein erstes Substrat;
b) Wahlweise Zuführen eines zweiten Substrats unter Bildung eines Substratverbundes, wobei das zweite Substrat mit der Masse in Kontakt gebracht wird;
c) Bestrahlen der Masse mit aktinischer Strahlung; und
d) Warmhärten der bestrahlten Masse auf dem Substrat und/oder in dem Substratverbund durch Erwärmen auf eine Temperatur von mindestens 40 °C, bevorzugt 60 bis 90 °C.

Bevorzugt erfolgt die Warmhärtung innerhalb einer für industrielle Prozesse akzeptablen Zeit von bis zu 90 Minuten.

Mit Hilfe des erfindungsgemäßen Verfahrens lässt sich eine hohe Positionstreue der gefügten Bauteile bis zur endgültigen Aushärtung realisieren. Auf konventionelle Fixierhilfen, die in der Praxis bei miniaturisierten Bauteilen nicht einsetzbar sind oder einen unzumutbaren Mehraufwand bedeuten, kann so verzichtet werden.

Die durch Bestrahlung lichtfixierten Massen weisen eine ausreichende Festigkeit auf, wenn eine Scherfestigkeit von mindestens 0,9 MPa unmittelbar nach Belichtung erreicht wird, beispielsweise nach einer 10 sec langen Belichtung mit 200 mW/cm². Bevorzugt beträgt die Scherfestigkeit der lichtfixierten Masse mindestens 1,5 MPa. Durch Anwendung einer höheren Belichtungsintensität kann die gleiche Lichtfixierfestigkeit bei kürzerer Belichtungszeit erreicht werden.

Die erfindungsgemäßen Massen weisen ferner kurze Lichtfixierzeiten auf und lassen sich in Schichtdicken von 100 µm bei Strahlungsintensitäten von 200 mW/mm² in höchstens 15 s, bevorzugt höchstens 10 s, besonders bevorzugt in höchstens 5 s mit der geforderten Scherfestigkeit fixieren. Mit den erfindungsgemäßen Massen können Lichtfixierzeiten bis hinab zu 0,5 s erreicht werden.

Die erfindungsgemäßen Massen zeichnen sich ferner dadurch aus, dass die auf ein Substrat applizierte Masse durch Bestrahlung in einen sogenannten B-Stage-Zustand überführt werden kann. In diesem Zustand besitzt die Masse eine ausreichende Form- und Konturstabilität, und kann somit ohne zu verfließen in nachgelagerten Prozessen verarbeitet werden.

Das Warmhärten der Masse muss nicht umgehend nach dem Bestrahlen mit aktinischer Strahlung erfolgen. Falls die erfindungsgemäße Masse im B-Stage-Zustand fern von Umwelteinflüssen gehalten wird, wie beispielsweise Feuchtigkeit, Schmutz und Temperaturen oberhalb der Raumtemperatur, kann auch nach maximal 90 Tagen noch eine Warmhärtung erfolgen, ohne die Eigenschaften der ausgehärteten Masse zu beeinträchtigen. Ein solches Verfahren zum Verkleben, Vergießen oder Beschichten von Substraten unter Verwendung der erfindungsgemäßen Massen umfasst bevorzugt die folgenden Schritte:
a) Dosieren der Masse auf ein erstes Substrat;
b) Bestrahlen der Masse mit aktinischer Strahlung;
c) wahlweise Zuführen eines zweiten Substrats unter Bildung eines Substratverbundes, wobei das zweite Substrat mit der bestrahlten Masse in Kontakt gebracht wird; und
d) Warmhärten des Substrates und/oder des Substratverbundes durch Erwärmen auf eine Temperatur von mindestens 40 °C, bevorzugt 60 bis 90 °C.

Zwischen den Schritten b) und c) oder b) und d) kann eine Wartezeit von bis zu 90 Tagen eingehalten werden, ohne dass die warmgehärtete Masse nach Schritt d) andere Eigenschaften als eine ansonsten unter gleichen Bedingungen gehärtete Masse zeigt, bei der keine Wartezeit eingehalten wurde.

### Verwendete Messverfahren und Definitionen

### Bestrahlung

Zur Bestrahlung wurden die erfindungsgemäßen Massen mit einer LED-Lampe DELOLUX 20 / 365 der Firma DELO Industrie Klebstoffe GmbH & Co. KGaA bei einer Wellenlänge von 365 nm mit einer Intensität von 200 ± 20 mW/cm² bestrahlt.

### Aushärtung

"Vernetzung" oder "Aushärtung" werden definiert als Polymerisations- oder Additionsreaktion über den Gelpunkt hinaus. Der Gelpunkt ist der Punkt, an dem das Speichermodul G' gleich dem Verlustmodul G" wird. Die Aushärtung der Probe wurde haptisch nach 60 min im Umluftofen bei 60°C und einer kurzen Abkühlzeit auf Raumtemperatur bewertet.

### Raumtemperatur

Raumtemperatur ist definiert als 23 ± 2 °C.

### Viskosität

Die Viskosität wurde mit einem Rheometer Physica MCR302 der Firma Anton Paar mit einem standardisierten Messkegel PP20 bei 23 °C mit einem 200 µm Spalt gemessen und bei einer Scherrate von 10/Sekunde bestimmt. Zur Beurteilung der Lagerstabilität bei Raumtemperatur wurde die Viskositätsmessung nach 24 h bzw. 72 h wiederholt. Die erfindungsgemäßen Massen sind über einen Zeitraum von mindestens 72 h verarbeitbar. Dieses Kriterium ist erfüllt, wenn bei einer Lagerung bei Raumtemperatur der Viskositätsanstieg über einen Zeitraum von 72 h weniger als 25 % beträgt. Entsprechende Massen werden in den Tabellen 1 und 2 bei dem Kriterium der Verarbeitungszeit mit "+" gekennnzeichnet. Massen, die dieses Kriterium nicht erfüllen, sind mit "-" gekennzeichnet.

### Bestimmung der Lichtfixierfestiqkeit

Die Lichtfixierfestigkeit wurde mit der Bondprüfanlage Dage Series 4000 Bondtester, erhältlich von der Firma Nordson, bestimmt. Hierzu wurde jeweils ein 4 x 4 x 4 mm Glaswürfel auf einen 20 x 20 x 5 mm FR4-Prüfkörper geklebt (Schichtdicke 100 µm), und die Verklebung wurde 10,0 sec lang mit einer LED-Lampe DELOLUX 20 / 365 bei einer Wellenlänge von 365 nm und einer Intensität von 200 ± 20 mW/cm² belichtet. Anschließend wurde nach 5 h Lagerung im Dunkeln bei Raumtemperatur die Scherfestigkeit mit Hilfe des Bondtesters bestimmt.

### Herstellungsbeispiele

Zur Herstellung der Einkomponentenmassen gemäß den nachfolgend angegebenen Beispielen wurden die folgenden Komponenten eingesetzt:

### Komponente (A): Mindestens difunktionelle epoxidhaltige Verbindung

A1: Epikote^{™} Resin 166 (Mischung aus Bisphenol A und Bisphenol F Glycidylethern; erhältlich von der Firma Hexion)

### Komponente (B): Mindestens difunktionelles Thiol

B1: Tris(3-mercaptopropyl)isocyanurat
B2: Karenz MT PE1 (Pentaerythritol-tetrakis(3-mercaptobutylat), erhältlich von der Firma Showa Denko)

### Komponente (C): Strahlungshärtende Verbindung

C1: Photomer 4006 (Trimethylolpropan-triacrylat, erhätlich von der Firma IGM Resins)

### Komponente (D): Photoinitiator

D1: Irgacure 184 (1-Hydroxycyclohexylphenylketon, erhätlich von der Firma BASF SE)

### Komponente (E): Stabilisatoren

E1: p-Toluolsulfonylisocyanat (erhältlich von der Firma. Sigma Aldrich)
E2: Pyrogallol (1,2,3-Trihydroxybenzol, erhältlich von der Firma Sigma Aldrich)
E3: Desmodur E14 (aromatisches, isocyanathaltiges Präpolymer auf Basis von Toluoldiisocyanat (TDI); erhätlich von der Firma Covestro)
E4: Desomodur VP LS 2371 (aliphatisches, isocyanathaltiges Präpolymer auf Basis von Isophorondiisocyanat (IPDI); erhätlich von der Firma Covestro)
E5: Desmodur XP2714 (silan-funktionelles aliphatisches Polyisocyanat auf Basis von Hexamethylendiisocyanat (HMDI); erhätlich von der Firma Covestro)
E6: Tolonate HDT (aliphatisches Polyisocyanat. basierend auf einem HMDI-Trimer; erhältlich von der Firma VencoreX Chemicals)
E7: p-Toluolsulfonamid (erhältich von der Fima Sigma Aldrich)

### Komponente (F): Beschleuniger

F1: Fujicure FXR-1081 (Epoxy-Amin-Addukt; erhätlich von der Firma Sanho Chemical Co. Ltd)

### Komponente (G): Additive

G1: pyrogene Kieselsäure als Thixotropiermittel
G2: Quarz als Füllstoff

Die erfindungsgemäßen Massen können durch Mischen der Komponenten und Homogenisieren der Mischung, bevorzugt unter Kühlung, hergestellt werden. Während des Herstellungsprozesses, insbesondere beim Homogenisieren, muss der Wärmeeintrag in die Masse möglichst gering gehalten werden. Bevorzugt beträgt die Temperatur der Masse während der Herstellung höchstens 25 °C.

Die Zusammensetzung der so hergestellten Einkomponentenmassen gemäß den Beispielen 1 bis 3 sowie den Vergleichsbeispielen 1 bis 2 ist in der nachfolgenden Tabelle 1 angegeben. Darüber hinaus sind die nach den oben beschriebenen Messverfahren ermittelten physikalischen Eigenschaften der Massen angegeben.

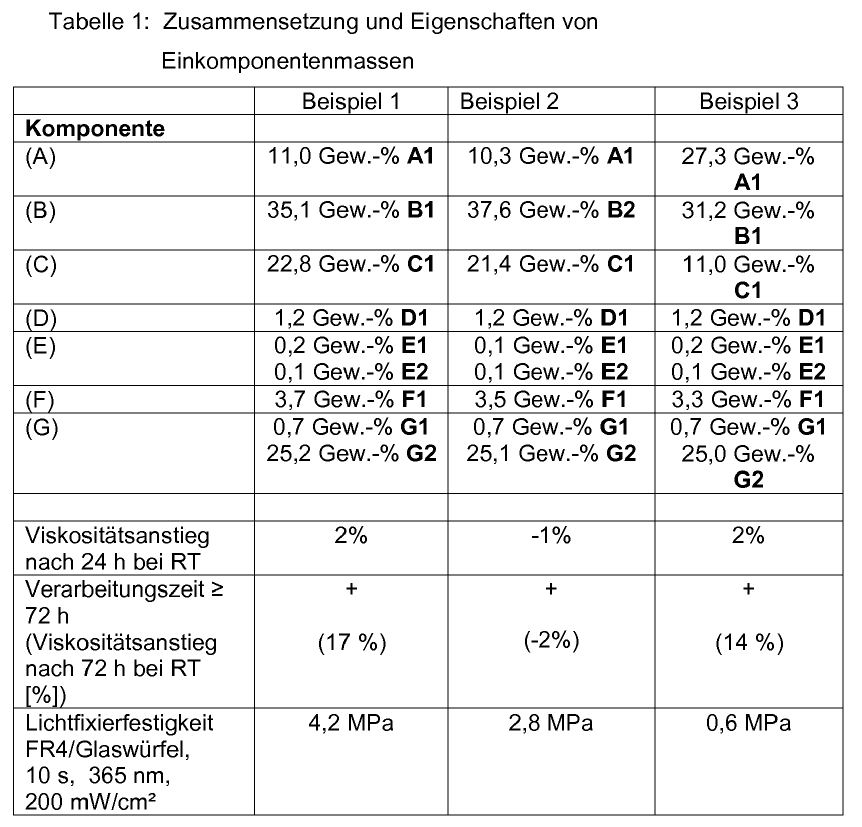

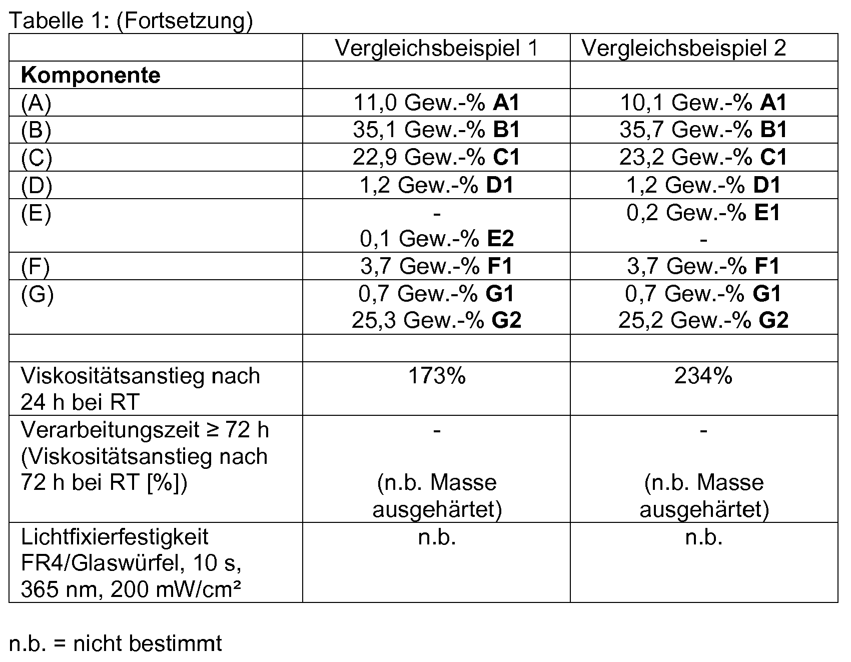

Die Einkomponentenmasse gemäß Beispiel 1 ist selbst nach 72 h Lagerung bei Raumtemperatur noch uneingeschränkt verarbeitbar und kann bei 60 °C innerhalb von 60 min vollständig ausgehärtet werden. Gleichzeitig weist die Masse eine hohe Lichtfixierfestigkeit von größer 4 MPa auf. Die Masse ist daher zur Verwendung für industrielle Prozesse mit kurzen Taktzeiten geeignet, in denen eine hohe Lichtfixierfestigkeit bei kurzen Belichtungszeiten gefordert ist.

Die Einkomponentenmasse gemäß Beispiel 2 enthält ein polyfunktionelles Thiol auf Basis eines Esters von 3-Mercaptobuttersäure. Die Masse ist nach 72 h Lagerung bei Raumtemperatur noch uneingeschränkt verarbeitbar und weist eine hohe Lichtfixierfestigkeit von 2,8 MPa auf.

Mit der Einkomponentenmasse von Beispiel 3 kann ebenfalls eine ausreichende Verarbeitungszeit bei Raumtemperatur und die geforderte schnelle Aushärtung bei Erwärmen auf eine Temperatur von 60 °C oder höher erzielt werden. Die Lichtfixierfestigkeit ist mit 0,6 MPa geringer als die mit den Beispielen 1 und 2 nach kurzer Bestrahlung erzielte Lichtfixierfestigkeit. Die Masse eignet sich daher zur Verarbeitung in Standardprozessen, bei denen die Bestrahlungsintensität und/oder die Belichtungszeit variiert werden kann.

Die Einkomponentenmassen der Vergleichsbeispiele 1 und 2 enthalten jeweils nur eine der Komponenten des Stabilisatorgemischs (E) der Beispiele 1 und 2. In der Masse gemäß Vergleichsbeispiel 1 ist nur eine Säure (E2) vorhanden, während die Masse gemäß Vergleichsbeispiel 2 nur das Sulfonylisocyanat (E1) als Stabilisator enthält. Der Viskositätsanstieg beträgt in beiden Massen nach 24 h bei Raumtemperatur jeweils weit über 100 %. Nach einer Lagerung über 72 h bei Raumtemperatur sind die Massen vollständig ausgehärtet und damit nicht mehr verarbeitbar. Nur die Kombination der Stabilisatoren (E1) und (E2) führt somit zu einer ausreichenden Verarbeitungszeit.

Nur die erfindungsgemäße Masse kombiniert die geforderten Eigenschaften aus langer Verarbeitungszeit bei einer gleichzeitig niedrigen Härtungstemperatur von 60 °C sowie wahlweise einer hohen Lichtfixierfestigkeit bei kurzer Bestrahlungszeit.

In der Tabelle 2 ist die Zusammensetzung von Einkomponentenmassen mit verschiedenen Stabilisatorkombinationen angegeben und zeigt den Einfluss der Variation der Stabilisatoren auf die Verarbeitbarkeit der jeweiligen Massen. Die Einkomponentenmassen der Vergleichsbeispiele 3 bis 6 enthalten als Stabilisator jeweils eine Säure (2) sowie verschiedene aliphatische oder aromatische Isocyanate, anstelle des in der Masse von Beispiel 1 verwendeten Sulfonylisocyanats (E1). In der Masse von Vergleichsbeispiel 7 ist ein Sulfonamid als Stabilisatorkomponente enthalten.

**Tabelle 2: Variation der Stabilisatoren**

| | Vergleichsbeispiel 3 | Vergleichsbeispiel 4 | Vergleichsbeispiel 5 | Vergleichsbeispiel 6 | Vergleichsbeispiel 7 |
|---|---|---|---|---|---|
| **Komponente** | | | | | |
| (A) | 10,9 Gew.- **% A1** | 10,9 Gew.- **% A1** | 10,9 Gew.- **% A1** | 10,9 Gew.- **% A1** | 11,0 Gew.- **% A1** |
| (B) | 34,7 Gew.- **% B1** | 34,7 Gew.- **% B1** | 34,7 Gew.- **% B1** | 34,7 Gew.- **% B1** | 35,1 Gew.- **% B1** |
| (C) | 22,6 Gew.- **% C1** | 22,6 Gew.- **%C1** | 22,6 Gew.- **% C1** | 22,6 Gew.- **% C1** | 22,8 Gew.- **% C1** |
| (D) | 1,2 Gew.-% **D1** | 1,2 Gew.-% **D1** | 1,2 Gew.-% **D1** | 1,2 Gew.-% **D1** | 1,2 Gew.-% **D1** |
| (E) | 1,0 Gew.-% **E3** | 1,0 Gew.-% **E4** | 1,0 Gew.-% **E5** | 1,0 Gew.-% **E6** | 0,2 Gew.-% **E7** |
| | 0,1 Gew.-% **E2** | 0,1 Gew.-% **E2** | 0,1 Gew.-% **E2** | 0,1 Gew.-% **E2** | 0,1 Gew.-% **E2** |
| (F) | 3,7 Gew.-% **F1** | 3,7 Gew.-% **F1** | 3,7 Gew.-% **F1** | 3,7 Gew.-% **F1** | 3,7 Gew.-% **F1** |
| (G) | 0,7 Gew.-% **G1** | 0,7 Gew.-% **G1** | 0,7 Gew.-% **G1** | 0,7 Gew.-% **G1** | 0,7 Gew.-% **G1** |
| | 25,1 Gew.- % **G2** | 25,1 Gew.- % **G2** | 25,1 Gew.- % **G2** | 25,0 Gew.- % **G2** | 25,2 Gew.- % **G2** |
| | | | | | |
| Viskositätsanstieg nach 24 h bei RT | 77% | 59% | 105% | 42% | 66 % |
| Verarbeitungszeit ≥ 72 h (Viskositätsanstieg nach 72 h bei RT [%]) | - (n.b.) | - (n.b.) | - (n.b.) | - (n.b.) | - (n.b.) |

| | | | | | |
|---|---|---|---|---|---|
| n.b. = nicht bestimmt, da ausgehärtet | | | | | |

Die in Tabelle 1 gezeigte Einkomponentenmasse gemäß Beispiel 1 umfasst eine Kombination der Stabilisatoren (E1) und (E2), und zeigt nach 24 h einen Viskositätsanstieg von lediglich 2 %. Nach 72 h beträgt der Viskositätsanstieg 17%. Die Masse ist damit auch nach mindestens drei Tagen Lagerung bei Raumtemperatur noch verarbeitbar. Die in der Tabelle 2 gezeigten Einkomponentenmassen der Vergleichsbeispiele 3 bis 6, die anstelle eines Sulfonylisocyanats verschiedene andere Isocyanate als Stabilisatoren enthalten, zeigen trotz einer erhöhten Konzentration der Isocyanate von 1 Gew.-% bereits nach 24 h einen Viskositätsanstieg von jeweils über 25 %. Der Austausch des Sulfonylisocyanates (E1) gegen ein Sulfonamid (E7) in der Masse von Vergleichsbeispiel 7 führt ebenfalls zu einer unbefriedigenden Verarbeitungszeit. Der Viskositätsanstieg beträgt nach 24 h bereits 66 %.

## Patentansprüche

1. Einkomponentenmasse, die bei Raumtemperatur flüssig ist, durch Strahlung fixiert und durch Wärme gehärtet werden kann, und die folgende Komponenten umfasst: (A) eine mindestens difunktionelle epoxidhaltige Verbindung; (B) ein mindestens difunktionelles Thiol; (C) eine strahlungshärtbare Verbindung, (D) einen Photoinitiator; (E) ein Stabilisatorgemisch, das mindestens ein Sulfonylisocyanat und mindestens eine Säure enthält; und (F) eine Stickstoffverbindung als Beschleuniger.

2. Einkomponentenmasse nach Anspruch 1, **dadurch gekennzeichnet, dass** das mindestens difunktionelle Thiol ein esterfreies Thiol umfasst, bevorzugt ein thiolterminiertes Isocyanurat, und besonders bevorzugt, dass das mindestens difunktionelle Thiol Tris(3-mercaptopropyl)isocyanurat umfasst oder daraus besteht.

3. Einkomponentenmasse nach einem der vorhergehenden Ansprüche, **dadurch gekennzeichnet, dass** das mindestens eine Sulfonylisocyanat p-Toluolsulfonylisocyanat umfasst oder daraus besteht.

4. Einkomponentenmasse nach einem der vorhergehenden Ansprüche, **dadurch gekennzeichnet, dass** die mindestens eine Säure ein acides Phenol, bevorzugt Pyrogallol, umfasst oder daraus besteht.

5. Einkomponentenmasse nach einem der vorhergehenden Ansprüche, **dadurch gekennzeichnet, dass** das Sulfonylisocyanat und die Säure jeweils in einem Anteil von 0,01 bis 1 Gew.-% in der Einkomponentenmasse vorliegen, bevorzugt in einem Anteil von jeweils 0,01 bis 0,5 Gew.-%, bezogen auf das Gesamtgewicht der Komponenten (A) bis (F).

6. Einkomponentenmasse nach einem der vorhergehenden Ansprüche, **dadurch gekennzeichnet, dass** die strahlungshärtende Verbindung in einem Anteil von bis zu 50 Gew.-% vorliegt, bezogen auf das Gesamtgewicht der Komponenten (A) bis (F), bevorzugt in einem Anteil von 10 bis 50 Gew.-% und besonders bevorzugt ein mindestens difunktionelles (Meth)acrylat in einem Anteil von 15 bis 50 Gew.-%, umfasst.

7. Einkomponentenmasse nach einem der vorhergehenden Ansprüche, **dadurch gekennzeichnet, dass** der Beschleuniger eine bei Raumtemperatur feste Stickstoffverbindung ist, die in der Einkomponentenmasse dispergiert vorliegt.

8. Einkomponentenmasse nach einem der vorhergehenden Ansprüche, **dadurch gekennzeichnet, dass** der Beschleuniger eine photolatente Base umfasst.

9. Einkomponentenmasse nach einem der vorhergehenden Ansprüche, **dadurch gekennzeichnet, dass** die Masse nach mindestens 24 h, bevorzugt mindestens 72 h Lagerung bei Raumtemperatur einen Viskositätsanstieg von weniger als 25 % aufweist, wobei der Viskositätsanstieg gemäß dem in der Beschreibung offenbarten Messverfahren bestimmt wird.

10. Einkomponentenmasse nach einem der vorhergehenden Ansprüche, **dadurch gekennzeichnet, dass** die Masse ab einer Temperatur von 40 bis 100 °C, bevorzugt von 60 °C bis 90 °C, innerhalb einer Zeit von bis zu 90 min vollständig aushärtet.

11. Einkomponentenmasse nach einem der vorhergehenden Ansprüche, **dadurch gekennzeichnet, dass** die Masse, jeweils bezogen auf das Gesamtgewicht der Komponenten (A) bis (F), folgende Komponenten umfasst oder daraus besteht:
(A) 5-80 Gew.- % einer mindestens difunktionellen Epoxidverbindung;
(B) 15 - 80 Gew.- % eines mindestens difunktionellen Thiols; bevorzugt Tris(3-mercaptopropyl)isocyanurat (TMPI), allein oder im Gemisch mit anderen difunktionellen Thiolen;
(C) 15 - 50 Gew.- % eines mindestens difunktionellen (Meth)Acrylats;
(D) 0,1 - 5 Gew.- % eines Photoinitiators;
(E) 0,01 - 0,5 Gew.- % eines Sulfonylisocyanates (E1) und 0,01 - 0,5 Gew.- % einer organischen Säure (E2);
(F) 0,5-15 Gew.- % einer Stickstoffverbindung als Beschleuniger, die bei Raumtemperatur in fester Form dispergiert in der Zusammensetzung vorliegt; und
(G) 0 bis 90 Gew.-% Füllstoffe sowie 0,1 bis 15 Gew.-% Thixotropiermittel.

12. Verfahren zum Verkleben, Vergießen, Abdichten und/oder Beschichten von Substraten unter Verwendung der Masse gemäß einem der vorhergehenden Ansprüche, wobei das Verfahren die folgenden Schritte umfasst:
a) Dosieren der Masse auf ein erstes Substrat;
b) Bestrahlen der Masse mit aktinischer Strahlung;
c) wahlweise Zuführen eines zweiten Substrats vor oder nach Schritt b) unter Bildung eines Substratverbundes, wobei das zweite Substrat mit der Masse in Kontakt gebracht wird; und
d) Warmhärten der bestrahlten Masse auf dem Substrat und/oder in dem Substratverbund.

13. Verfahren nach Anspruch 12 **dadurch gekennzeichnet, dass** die Masse nach der Bestrahlung mit aktinischer Strahlung eine Scherfestigkeit von mindestens 0,9 MPa aufweist, wobei die Scherfestigkeit gemäß dem in der Beschreibung offenbarten Messverfahren bestimmt wird.

14. Verwendung der Masse gemäß einem der Ansprüche 1 bis 11 als Klebstoff oder Dichtstoff für das Verkleben, Vergießen, Abdichten und/oder Beschichten von Substraten, wobei das Substrat bevorzugt ein optisches, elektronisches oder optoelektronisches Bauteil ist.

## Claims

1. A one-pack composition that is liquid at room temperature, can be fixed by radiation and cured by heat, comprising the following components: (A) an at least bifunctional epoxy-containing compound; (B) an at least bifunctional thiol; (C) a radiation-curable compound; (D) a photoinitiator; (E) a stabilizer blend that contains at least one sulfonyl isocyanate und at least one acid; and (F) a nitrogen compound as an accelerator.

2. The one-pack composition of claim 1, **characterized in that** the at least bifunctional thiol comprises an ester-free thiol, preferably a thiol-terminated isocyanurate, and particularly preferably that the at least bifunctional thiol comprises or consists of tris(3-mercaptopropyl)isocyanurate.

3. The one-pack composition of any one of the preceding claims, **characterized in that** the at least one sulfonyl isocyanate comprises or consists of p-toluene sulfonyl isocyanate.

4. The one-pack composition of any one of the preceding claims, **characterized in that** the at least one acid comprises or consists of an acidic phenol, preferably pyrogallol.

5. The one-pack composition of any one of the preceding claims, **characterized in that** the sulfonyl isocyanate and the acid are each present in the one-pack composition in a proportion of 0.01 to 1 wt%, preferably in a proportion of 0.01 to 0.5 wt%, based on the total weight of components (A) to (F).

6. The one-pack composition of any one of the preceding claims, **characterized in that** the radiation-curable compound is present in a proportion of up to 50 wt%, based on the total weight of components (A) to (F), preferably in a proportion of 10 to 50 wt%, and particularly preferably comprises an at least bifunctional (meth)acrylate in a proportion of 15 to 50 wt%.

7. The one-pack composition of any one of the preceding claims, **characterized in that** the accelerator is a nitrogen compound that is solid at room temperature, and that is present in a dispersed form in the one-pack composition.

8. The one-pack composition of any one of the preceding claims, **characterized in that** the accelerator comprises a photolatent base.

9. The one-pack composition of any one of the preceding claims, **characterized in that** the composition has an increase in viscosity of less than 25% after storage for at least 24 h, preferably at least 72 h, at room temperature, wherein the increase in viscosity is determined in accordance with the measuring method disclosed in the description.

10. The one-pack composition of any one of the preceding claims, **characterized in that** the composition completely cures at a temperature of 40 to 100 °C, preferably from 60 °C to 90 °C, within a period of up to 90 min.

11. The one-pack composition of any one of the preceding claims, **characterized in that** the composition, based on the total weight of components (A) to (F), comprises or consists of the following components:
(A) 5-80 wt% of an at least bifunctional epoxy compound;
(B) 15 - 80 wt% of an at least bifunctional thiol; preferably tris(3-mercaptopropyl)isocyanurate (TMPI) alone or in a mixture with other bifunctional thiols;
(C) 15 - 50 wt% of an at least bifunctional (meth)acrylate;
(D) 0.1 - 5 wt% of a photoinitiator;
(E) 0.01 - 0.5 wt% of a sulfonyl isocyanate (E1) and 0.01 - 0.5 wt% of an organic acid (E2);
(F) 0.5 - 15 wt% of a nitrogen compound as an accelerator present in the composition at room temperature in a solid dispersed form; and
(G) 0 to 90 wt% of fillers and 0.1 to 15 wt% of a thixotropic agent.

12. A method for the bonding, casting, sealing and/or coating of substrates using the composition according to any of the preceding claims, the method comprising the following steps:
a) dosing the composition onto a first substrate;
b) irradiating the composition with actinic radiation;
c) optionally supplying a second substrate prior to or after step b) to form a substrate composite, wherein the second substrate is brought into contact with the composition; and
d) heat-curing the irradiated composition on the substrate and/or in the substrate composite.

13. The method of claim 12, **characterized in that** the composition, after irradiation with actinic radiation, has a shear strength of at least 0.9 MPa, wherein the shear strength is determined in accordance with the measuring method disclosed in the description.

14. Use of the composition according to any one of claims 1 to 11 as an adhesive or sealant for the bonding, casting, sealing and/or coating of substrates, the substrate being preferably an optical, electronic or optoelectronic part.

## Revendications

1. Masse à un composant qui est liquide à température ambiante, qui est apte à être fixée par rayonnement et à être durcie par chaleur, et qui comprend les composants suivants : (A) un composé au moins difonctionnel et contenant un époxy ; (B) un thiol au moins difonctionnel ; (C) un composé durcissable par rayonnement, (D) un photoinitiateur ; (E) un mélange de stabilisateurs qui contient au moins un isocyanate de sulfonyle et au moins un acide ; et (F) un composé azoté en tant qu'accélérateur.

2. Masse à un composant selon la revendication 1, **caractérisée en ce que** le thiol au moins difonctionnel comprend un thiol exempt d'ester, de préférence un isocyanurate à terminaison thiol, et de manière particulièrement préférée **en ce que** le thiol au moins difonctionnel comprend ou est composé de tris(3-mercaptopropyl)isocyanurate.

3. Masse à un composant selon l'une des revendications précédentes, **caractérisée en ce que** ledit au moins un isocyanate de sulfonyle comprend ou est composé d'isocyanate de p-toluène sulfonyle.

4. Masse à un composant selon l'une des revendications précédentes, **caractérisée en ce que** ledit au moins un acide comprend ou est composé d'un phénol acide, de préférence de pyrogallol.

5. Masse à un composant selon l'une des revendications précédentes, **caractérisée en ce que** l'isocyanate de sulfonyle et l'acide sont chacun présents dans la masse à un composant dans une proportion de 0,01 à 1 % en poids, de préférence respectivement dans une proportion de 0,01 à 0,5 % en poids par rapport au poids total des composants (A) à (F).

6. Masse à un composant selon l'une des revendications précédentes, **caractérisée en ce que** le composé durcissable par rayonnement est présent dans une proportion jusqu'à 50 % en poids par rapport au poids total des composants (A) à (F), de préférence dans une proportion de 10 à 50 % en poids, et de manière particulièrement préférée comprend un (méth)acrylate au moins difonctionnel dans une proportion de 15 à 50 % en poids.

7. Masse à un composant selon l'une des revendications précédentes, **caractérisée en ce que** l'accélérateur est un composé azoté solide à température ambiante qui est présent sous une forme dispersée dans la masse à un composant.

8. Masse à un composant selon l'une des revendications précédentes, **caractérisée en ce que** l'accélérateur comprend une base photolatente.

9. Masse à un composant selon l'une des revendications précédentes, **caractérisée en ce que** la masse présente une augmentation de la viscosité inférieure à 25 % après un stockage d'au moins 24 h, de préférence d'au moins 72 h à température ambiante, l'augmentation de la viscosité étant déterminée selon le procédé de mesure divulgué dans la description.

10. Masse à un composant selon l'une des revendications précédentes, **caractérisée en ce que** la masse durcit complètement à partir d'une température de 40 à 100 °C, de préférence de 60 °C à 90 °C, en l'espace d'une période durant jusqu'à 90 min.

11. Masse à un composant selon l'une des revendications précédentes, **caractérisée en ce que** la masse, respectivement par rapport au poids total des composants (A) à (F), comprend ou est composée des composants suivants :
(A) 5-80 % en poids d'un composé époxy au moins difonctionnel ;
(B) 15 à 80 % en poids d'un thiol au moins difonctionnel, de préférence le tris(3-mercaptopropyl)isocyanurate (TMPI), seul ou dans un mélange avec d'autres thiols difonctionnels ;
(C) 15 à 50 % en poids d'un (méth)acrylate au moins difonctionnel ;
(D) 0,1 à 5 % en poids d'un photoinitiateur ;
(E) 0,01 - 0,5 % en poids d'un isocyanate de sulfonyle (E1) et 0,01 - 0,5 % en poids d'un acide organique (E2) ;
(F) 0,5 à 15 % en poids d'un composé azoté en tant qu'accélérateur présent sous une forme solide dispersée dans la composition à température ambiante ; et
(G) 0 à 90 % en poids de matières de charge et 0,1 à 15 % en poids d'un agent thixotrope.

12. Procédé de collage, de coulage, d'étanchement et/ou de revêtement de substrats en utilisant la masse selon l'une des revendications précédentes, le procédé comprenant les étapes suivantes :
a) le dosage de la masse sur un premier substrat ;
b) l'irradiation de la masse avec un rayonnement actinique ;
c) l'amenée sélective d'un deuxième substrat avant ou après l'étape b) en formant un composite de substrats, le deuxième substrat étant amené en contact avec la masse ; et
d) le durcissement à chaud de la masse irradiée sur le substrat et/ou dans le composite de substrats.

13. Procédé selon la revendication 12, **caractérisé en ce que** la masse, après l'irradiation avec un rayonnement actinique, présente une résistance au cisaillement d'au moins 0,9 MPa, la résistance au cisaillement étant déterminée selon le procédé de mesure divulgué dans la description.

14. Utilisation de la masse selon l'une des revendications 1 à 11 en tant que matériau adhésif ou matériau d'étanchéité pour le collage, le coulage, l'étanchement et/ou le revêtement de substrats, le substrat étant de préférence une pièce optique, électronique ou optoélectronique.
